# EUROPEAN PATENT APPLICATION

(11) **EP 1 599 018 A1**
(43) Date of publication of application: **23.11.2005**
(21) Application number: 05252822.1
(22) Date of filing: 09.05.2005
(51) Int. Cl.: H04L 29/06, A63F 13/12, H04M 3/56

(54) **Audio transmission system and method**

(30) Priority: 13.05.2004 JP 2004143002
(71) Applicant: SONY CORPORATION, Tokyo 141 (JP)
(72) Inventor: Matsushita, Yoshiko, c/o Int. Property Dept, Shinagawa-ku, Tokyo 141 (JP)
(74) Representative: Turner, James Arthur

(57) **Abstract**

Disclosed is an audio signal transmission system that allows all users to confirm the overall system operation and actively select various system services. The audio signal transmission system, which allows a plurality of terminal devices to share channels that are allocated to various sound sources, includes a terminal device corresponding to one sound source; a material information storage device for storing material information constituting a virtual world; a symbol position storage device for storing a symbol moving in the virtual world and the position information about the symbol; a relationship storage device for storing the relationship between a symbol and a terminal device; a symbol move control device for controlling the move of a symbol in accordance with the associated control data received from each terminal device; and an image display device for displaying an image combination of various symbols and the virtual world as a shared screen.

## Description

This invention relates to audio signal transmission systems and methods, servers, network terminal devices and recording media.

Various audio signal transmission systems exist to provide various applications, including an audio conference system, language learning system, TV conference system, and simulation system.

A centralized management method is employed for these systems. More specifically, a management apparatus grasps and manages the overall system operation.

### [Patent Document 1]

Japanese Patent Laid-open No. Hei 7-219867

### [Patent Document 2]

Japanese Patent Laid-open No. Hei 2001-331615

Various respective aspects and features of the invention are defined in the appended claims. Features from the dependent claims may be combined with features of the independent claims as appropriate and not merely as explicitly set out in the claims.

In one aspect, the present invention relates to an audio signal transmission system for using a plurality of network terminal devices to receive audio signals that are generated by various sound sources. In another aspect, the present invention relates to an audio signal transmission method for using a plurality of network terminal devices to receive audio signals that are generated by various sound sources.

In another aspect, the present invention relates to a server constituting the audio signal transmission system. In another aspect, the present invention relates to a network terminal device constituting the audio signal transmission system.

In another aspect, the present invention relates to a recording medium that records the program to be executed by a computer functioning as a server for an audio signal transmission system. In still another aspect, the present invention relates to a recording medium that records the program to be executed by a computer functioning as a network terminal device for an audio signal transmission system.

As such being the case, a scheme for allowing all the users of an audio signal transmission system to confirm the overall system operation is demanded. A scheme for permitting each user to actively select services offered by the system is also demanded.

In view of the above technical problems, the inventor of the present invention proposes the following technical method.

The audio signal transmission system is to be established in a network in the broad sense of the term.

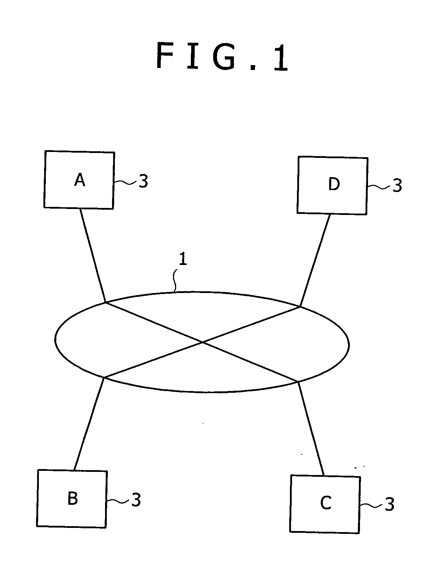

FIG. 1 of the accompanying drawings shows an example of the audio signal transmission system. FIG. 1 shows a state where network terminal devices 3 are connected to a network 1. Any type of network will do. Either a wired network or wireless network will do.

The network terminal devices 3 incorporate an interface that conforms to the communication method employed by the network 1.

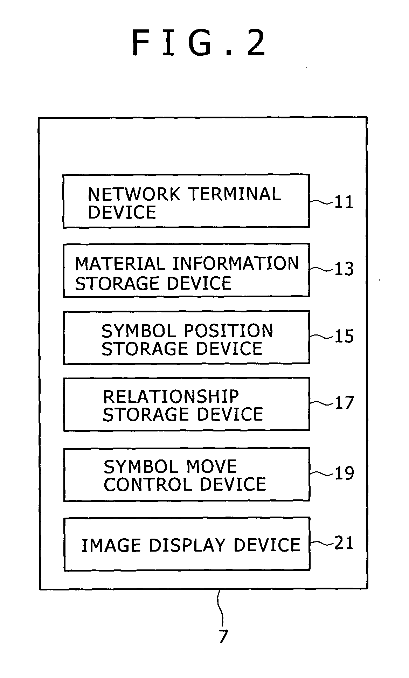

FIG. 2 shows the configuration of an audio signal transmission system 7. The audio signal transmission system 7 includes a plurality of network terminal devices 11, a material information storage device 13, a symbol position storage device 15, a relationship storage device 17, a symbol move control device 19, and an image display device 21.

Each network terminal device 11 corresponds to one sound source. For example, a system user's voice is used as a sound source. For example, a system sound source is also used as a sound source.

A certain network terminal device 11 may be used as a server. However, a system configuration excluding a server can also be adopted.

The material information storage device 13 is a storage device or storage area for storing material information that constitutes a virtual world.

The virtual world is a world that is configured by combining computer graphics and sound effects. The present specification assumes that the virtual world includes a three-dimensional space in addition to a two-dimensional space.

The material information is material image data that constitutes a town or room within the virtual world.

Only one material information storage device 13 may be furnished to the system. Alternatively, however, the material information storage device 13 may be provided for each network terminal device 11.

The material information retained by a network terminal device 11 may be copied from another network terminal device 11 via the network.

The symbol position storage device 15 is a storage device or storage area for storing a symbol moving in the virtual world and the position information about the symbol.

The symbol corresponds to a network terminal device 11. In other words, the symbol represents a system user.

For example, an imaginary person, animal, pattern, or icon is used as a symbol. It is preferred that the symbols be distinguishable.

It is assumed that the position information about a symbol is given as coordinate values for identifying the position within the virtual world.

The relationship storage device 17 is a storage device or storage area for storing the relationship between symbols and network terminal devices 11.

For example, the identification information (e.g., identification number) unique to a symbol and the identification information (e.g., identification number) unique to a network terminal device are recorded as the relationship.

The symbol move control device 19 is a control device for controlling the move of a symbol in accordance with the associated control data received from each network terminal device 11.

For example, the symbol move control device 19 is provided in the form of a processor, dedicated circuit, or processing board. The move of a symbol displayed in the virtual world is permitted due to the existence of the symbol move control device 19.

The control data is transmitted from a network terminal device 11 that corresponds to a symbol.

Consequently, the user of the system can freely control the move of the associated symbol.

The image display device 21 is a display device for displaying an image combination of various symbols and the virtual world as a shared screen. Various display devices and projector may also be used as the image display device 21.

Only one image display device 21 may be furnished to the system. Alternatively, however, the image display device 21 may be provided for each network terminal device 11.

The system user can confirm his/her own operation and the operations of the others within the virtual world via the shared screen.

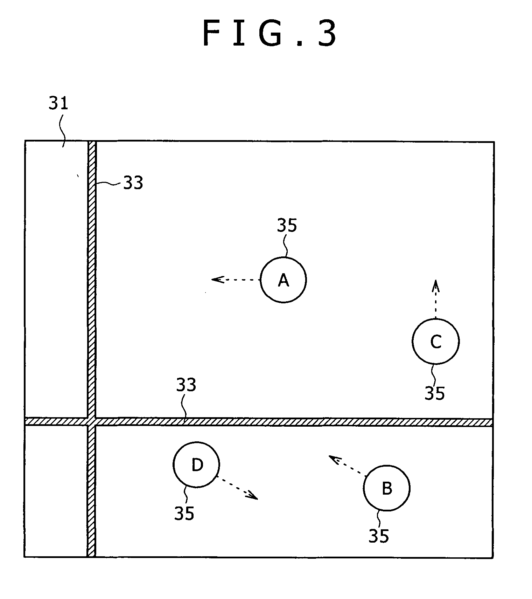

FIG. 3 shows a typical shared screen 31. In the example shown in FIG. 3, the shared screen 31 shows a virtual world that includes two intersecting paths 33.

The shared screen 31 shows symbols 35, which correspond to network terminal devices 11.

The system user can freely move a symbol 35 through the associated network terminal device 11.

The shared screen 31 can be confirmed by any system user. Therefore, the system user can confirm the position of his/her symbol, the positions of the symbols of the others, and the moves of various symbols.

It goes without saying that each symbol can be freely moved by the system user.

Therefore, the system user can freely use various services available within the virtual world and establish voice communication with any party. For example, voice communication can be established when two symbols are within a certain range.

The storage devices 13, 15, 17, control device 19, and image display device 21, which have been described above, may be exclusively allocated to one network terminal device 11 or distributively allocated to a plurality of network terminal devices 11 that constitute the system.

The optimum allocation method should be selected in accordance with the target system.

For example, when a centralized management type system is employed, many devices are mounted in a single network terminal device 11. The term "mount" does not always mean that the devices are mounted in the same housing as for the network terminal device 11.

In this case, too, some devices may be distributively allocated to a plurality of network terminal devices 11.

If, for instance, a decentralized system is employed, many devices should be distributively allocated to a plurality of network terminal devices.

When the above technical method is adopted, all the audio signal transmission system users can confirm the overall system operation through the shared screen.

Further, each user can freely move a symbol. It is therefore possible to realize an audio signal transmission system to voluntarily establish communication and experience a simulation.

The invention will now be described by way of example with reference to the accompanying drawings, throughout which like parts are referred to by like references, and in which:
FIG. 1 illustrates a typical configuration of an audio signal transmission system;
FIG. 2 illustrates the system configuration of an audio signal transmission system;
FIG. 3 shows a typical shared screen;
FIG. 4 illustrates one embodiment of an audio signal transmission system;
FIG. 5 shows a typical functional configuration of a server;
FIG. 6 shows a typical functional configuration of a group area function;
FIG. 7 shows a typical functional configuration of an output sound volume control function;
FIG. 8 shows a typical functional configuration of an output balance control function;
FIG. 9 shows a typical functional configuration of a direct call function;
FIG. 10 shows a typical functional configuration of a voice mail function;
FIG. 11 shows a typical functional configuration of a position confirmation function;
FIG. 12 shows a typical functional configuration of a monitoring function;
FIG. 13 shows how terminal devices are interconnected;
FIG. 14 shows a typical internal configuration of a terminal device;
FIGS. 15A, 15B, and 15C illustrate a path automatic loopback function;
FIG. 16 illustrates the relationship between terminal devices and channels;
FIG. 17 illustrates a channel-specific, input sound volume control function;
FIG. 18 illustrates a channel-specific, output sound volume control function;
FIGS. 19A, 19B, 19C, and 19D show typical transmission data structures;
FIG. 20 illustrates one embodiment of a shared screen;
FIG. 21 shows a typical functional configuration of a shared screen;
FIGS. 22A and 22B illustrate a group call function;
FIGS. 23A and 23B illustrate how a display format change is applied when a symbol moves to a valid area;
FIGS. 24A and 24B illustrate an electronic volume control function, which depends on the distance between sound sources; and
FIGS. 25A and 25B show the images of an electronic volume, which depends on the distance between sound sources.

Embodiments of an audio signal transmission system according to the present invention will now be described.

As regards a technology that is not described or depicted in this specification, the relevant known technology generally accepted in the art is applied.

It must be recognized that the present invention is not intended to be limited only to the embodiments described below.

### (1) System Configuration

### (1-1) Overall Configuration

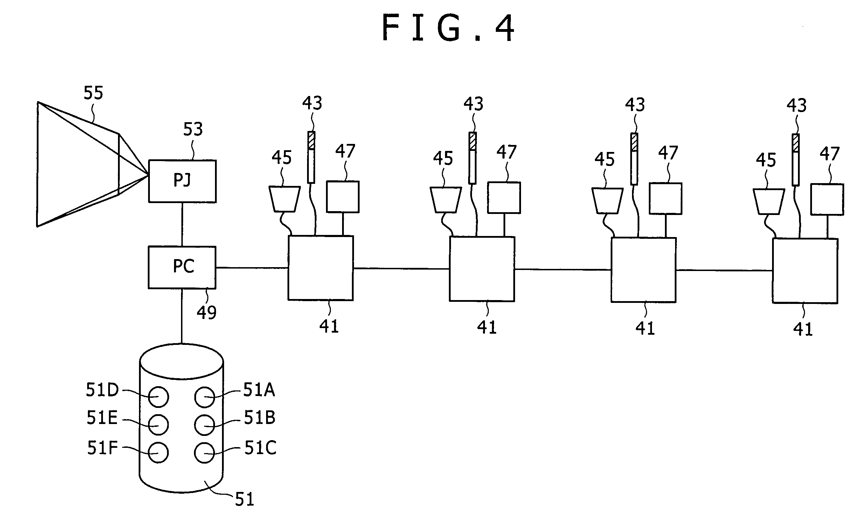

FIG. 4 shows an embodiment of an audio signal transmission system. The transmission system includes four terminal devices 41.

Each terminal device 41 is connected to a microphone 43, a speaker 45, and an input device 47. For example, a pointing device is used as the input device 47 to move a symbol on screen.

In the transmission system, a computer 49 is connected to the leftmost terminal device 41.

In the present embodiment, the computer 49 functions as a server and the terminal devices 41 function as clients.

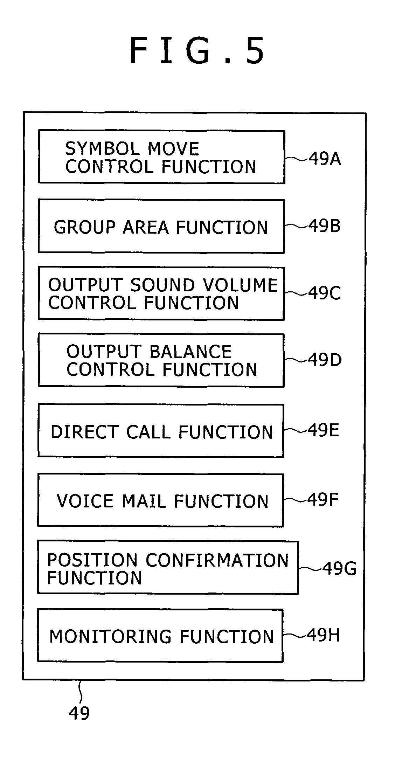

FIG. 5 shows major functions provided by the computer 49. These functions are provided by a program that is executed by the computer 49.

The computer 49 incorporates a symbol move control function 49A, a group area function 49B, an output sound volume control function 49C, an output balance control function 49D, a direct call function 49E, a voice mail function 49F, a position confirmation function 49G, and a monitoring function 49H.

The symbol move control function 49A corresponds to a function for controlling the on-screen move of a symbol. The symbol move control function 49A updates the position information about each symbol and the display position of each symbol.

The control data for specifying the direction of move and the amount of move is given by the terminal devices corresponding to various symbols.

The group area function 49B corresponds to an output function for intra-group-area group calls and background sound.

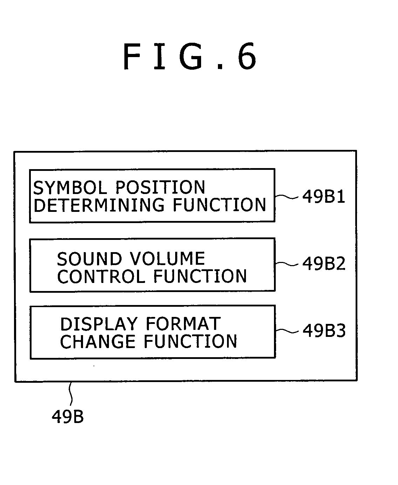

FIG. 6 shows the functional configuration of the group area function 49B.

The group area function 49B is implemented by combining a symbol position determining function 49B1, a sound volume control function 49B2, and a display format change function 49B3.

The symbol position determining function 49B1 is used to determine whether the symbol corresponding to a terminal device is positioned within at least one group area.

The sound volume control function 49B2 is used to control the output sound volume of another sound source positioned in the same group area. This function is used, for instance, to increase/decrease the sound volumes of the right- and left-hand speakers equally or individually.

The display format change function 49B3 is used to change the display format for a symbol positioned in a group area to a display format that differs from a case where the symbol is positioned outside the group area.

The output sound volume control function 49C corresponds to a function for controlling the output sound volume in accordance with an on-screen distance between sound sources. This function is used to give perspective by making sound volume adjustments.

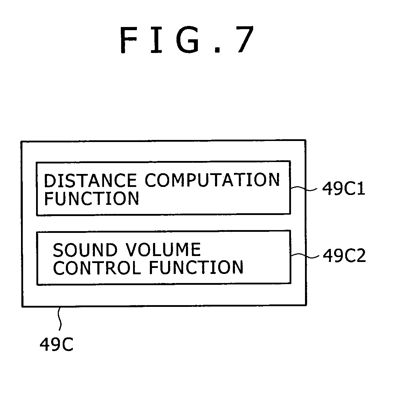

FIG. 7 shows the functional configuration of the output sound volume control function 49C.

The output sound volume control function 49C is implemented by combining a distance computation function 49C1 and a sound volume control function 49C2.

The distance computation function 49C1 is used to compute the virtual world distance between a symbol corresponding to the terminal device to be controlled and a sound source other than the terminal device to be controlled.

The sound volume control function 49C2 is used in accordance with the computed distance to control the output sound volume of another sound source that is output by the terminal device to be controlled.

The output balance control function 49D corresponds to a function for controlling the output balance in accordance with the on-screen positional relationship between sound sources. In the present embodiment, this function is used to vary the sound volume balance between the right- and left-hand speakers.

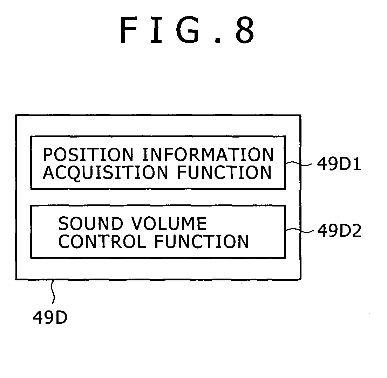

FIG. 8 shows the functional configuration of the output balance control function 49D.

The output balance control function 49D is implemented by combining a position information acquisition function 49D1 and a sound volume control function 49D2.

The position information acquisition function 49D1 is used to determine whether another sound source is positioned to the right or left of a symbol corresponding to the terminal device to be controlled.

The sound volume control function 49D2 is used in accordance with the determination result to control the right- and left-hand output volumes of another sound source that are output by the terminal device to be controlled.

The direct call function 49E corresponds to a function for establishing a one-to-one direct call.

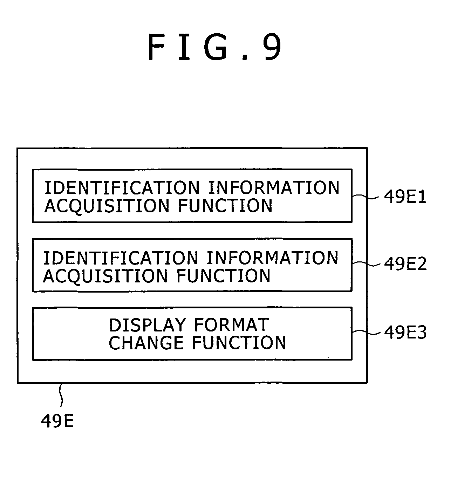

FIG. 9 shows the functional configuration of the direct call function 49E.

The direct call function 49E is implemented by combining identification information acquisition functions 49E1, 49E2, and a display format change function 49E3.

Identification information acquisition function 49E1 is used to acquire the information for identifying the terminal device corresponding to a symbol positioned in a direct call request area.

On the other hand, identification information acquisition function 49E2 is used to acquire the information for identifying the terminal device designated as the direct call destination.

The display format change function 49E3 is used to change the display format for a symbol corresponding to the terminal device designated as the direct call destination to a display format differing from a format prevailing before designation.

The voice mail function 49F corresponds to a function for establishing a one-to-one direct call by means of voice mail.

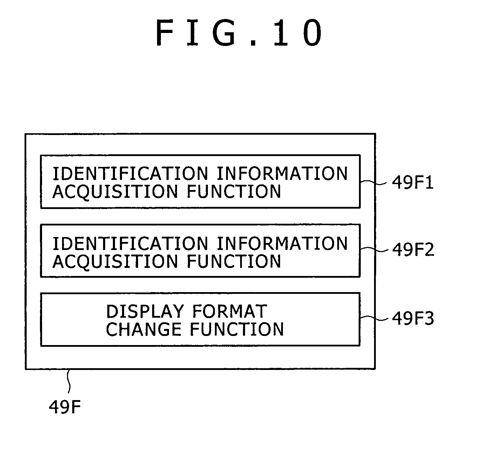

FIG. 10 shows the functional configuration of the voice mail function 49F.

The voice mail function 49F is implemented by combining identification information acquisition functions 49F1, 49F2, and a display format change function 49F3.

Identification information acquisition function 49F1 is used to acquire the information for identifying the terminal device corresponding to a symbol positioned in a voice mail area.

On the other hand, identification information acquisition function 49F2 is used to acquire the information for identifying the terminal device designated as the voice mail destination.

The display format change function 49F3 is used to change the display format for a symbol corresponding to the terminal device designated as the voice mail destination to a display format differing from a format prevailing before designation.

The position confirmation function 49G corresponds to a function for giving an on-screen illuminated indication or other indication to notify the system user of a desired position.

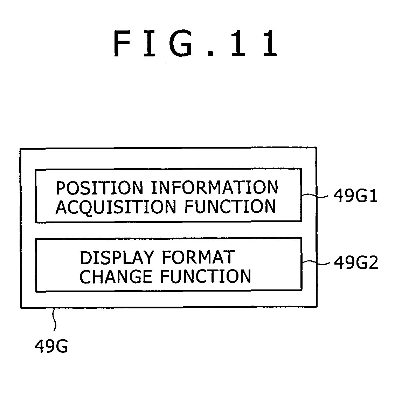

FIG. 11 shows the functional configuration of the position confirmation function 49G.

The position confirmation function 49G is implemented by combining a position information acquisition function 49G1 and a display format change function 49G2.

The position information acquisition function 49G1 is used to access the symbol position storage device to acquire the position information about a symbol corresponding to the terminal device from which a position confirmation request has been transmitted.

The display format change function 49G2 is used to change the display format for a symbol in acquisition position to a display format differing from a format prevailing before position confirmation request transmission.

The monitoring function 49H corresponds to a function for monitoring the sounds to which individual system users listen.

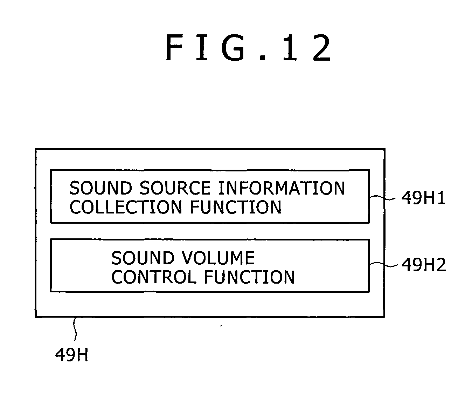

FIG. 12 shows the functional configuration of the monitoring function 49H.

The monitoring function 49H is implemented by combining a sound source information collection function 49H1 and a sound volume control function 49H2.

The sound source information collection function 49H1 is used to acquire the information about a sound source output state in a terminal device that is designated as a monitoring target.

The sound volume control function 49H2 is used to control the output sound volume of each sound source in accordance with the acquired information.

The computer 49 is connected to a storage device 51 and a projector 53.

The storage device 51 has various storage areas including a material information storage area 51A, a symbol position storage area 51B, a relationship storage area 51C, a group area retention area 51D, a direct call request area storage area 51E, and a voice mail area storage area 51F.

The storage areas correspond to the aforementioned material information storage device 13, symbol position storage device 15, and relationship storage device 17.

A magnetic recording medium, optical recording medium, semiconductor recording medium, or other physical device or medium is used as a recording medium for the storage device 51.

For example, a flexible disk, hard disk, other disk-shaped recording medium, magnetic tape, or other tape-shaped recording medium is used as the magnetic recording medium.

As the optical recording medium, a disk-shaped recording medium, card-shaped recording medium, or tape-shaped recording medium is used.

The projector 53 is an image output device for projecting a shared screen, which is obtained by combining various symbols with a virtual world, onto a screen 55. Typical contents of the shared screen and the functions offered through the shared screen will be described later.

### (1-2) Terminal Device-to-Terminal Device Connection

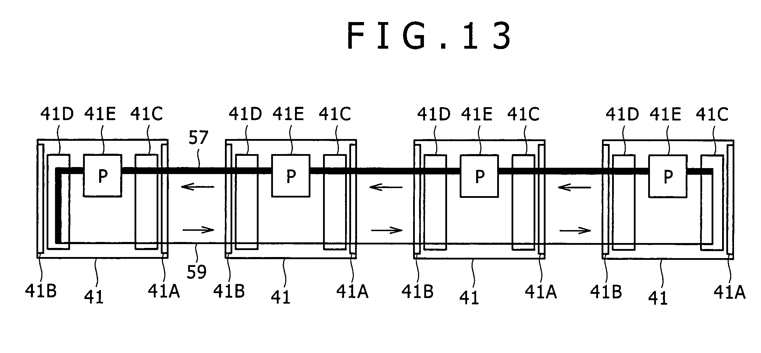

FIG. 13 shows how the terminal devices are interconnected. In the present embodiment, all the employed terminal devices 41 are configured in the same manner. A single cable is used to establish a wired connection between the terminal devices.

Two paths exist between the terminal devices. The transmission directions of these two paths are opposite to each other. One of them is a processing path 57 and indicated by a thick line in the figure. The other one is a relay path 59 and indicated by a thin line in the figure.

For transmission between the terminal devices, a serial or parallel transmission method can be used. A time-division multiplexing, frequency multiplexing, code-division multiplexing, wavelength-division multiplexing, or other known multiplexing method is applicable to multiplexing.

As indicated in FIG. 13, the two paths are joined at both ends to form a ring-shaped, logical path. This logical path is used to achieve data accumulation, distribution, and routing.

The logical path can transmit audio data, video data, numerical data, character data (text data), control data, and a combination of these data. In the present embodiment, the logical path transmits audio data and control data only.

### (1-3) Terminal device configuration

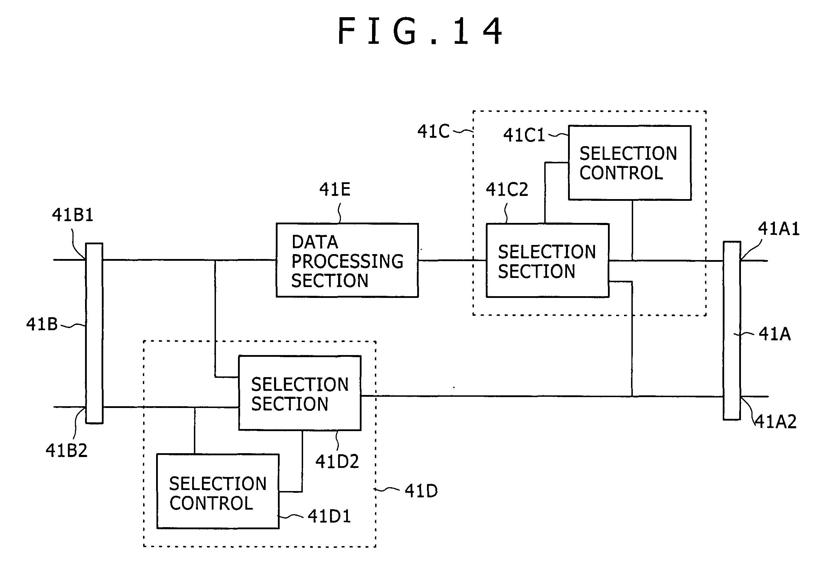

FIG. 14 shows a typical configuration of a terminal device 41. The terminal device 41 includes two input/output interfaces 41A, 41B, two path selection sections 41C, 41D, and a data processing section 41E.

Input/output interface 41A is a connection device that includes a processing path data input section 41A1 and a relay path data output section 41A2. On the other hand, input/output interface 41B is a connection device that includes a processing path data output section 41B1 and a relay path data input section 41B2.

Path selection section 41C is a device that monitors data input section 41A1 and selects the path to be given to the data processing section 41E. A monitoring process is performed by a selection control section 41C1. An input terminal changeover process is performed by a selection section 41C2.

When, for instance, a processing path input is detected, the selection control section 41C1 changes the input terminal of the selection section 41C2 to switch to data input section 41A1.

When, for instance, no processing path input is detected, the selection control section 41C1 changes the input terminal of the selection section 41C2 to switch to data output section 41A2.

Path selection section 41D is a device that monitors data input section 41B2 and selects the path to be given to data output section 41A2 at the other end. A monitoring process is performed by a selection control section 41D1. An input terminal changeover process is performed by a selection section 41D2.

When, for instance, a relay path input is detected, the selection control section 41D1 changes the input terminal of the selection section 41D2 to switch to data input section 41B2.

When, for instance, no relay path input is detected, the selection control section 41D1 changes the input terminal of the selection section 41D2 to switch to data output section 41B1.

Since path selection sections 41C and 41D operate as described above, the terminal device 41 is provided with a path automatic loopback function.

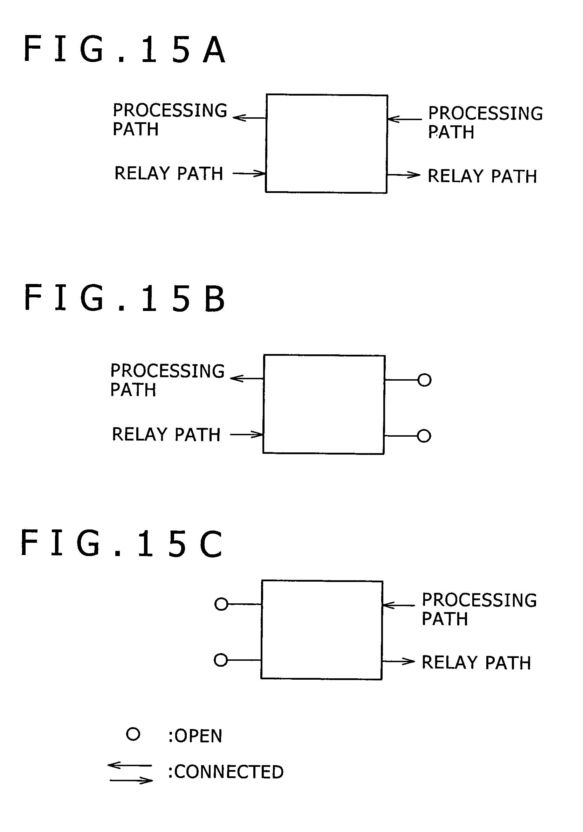

FIGS. 15 illustrate the path automatic loopback function.

When the data transmission system shown in FIG. 13 is employed, the terminal device connection scheme can be classified into three types that are indicated in FIGS. 15A to 15C.

FIG. 15A shows a connection scheme in which both ends of the terminal device are connected to the other terminal devices. In FIG. 13, this connection scheme is employed by two terminal devices.

In the above situation, path selection sections 41C and 41D both detect a path input. Eventually, path selection section 41C selects a processing path that is output from the previous terminal device. On the other hand, path selection section 41D selects a relay path that is output from the previous terminal device.

FIG. 15B shows a connection scheme in which input/output interface 41A is open. In FIG. 13, this connection scheme is employed by one terminal device.

In the above situation, path selection section 41C does not detect a processing path input. Therefore, path selection section 41C selects an internal path (that is, a relay path). The relay path then loops back within the terminal device.

FIG. 15C shows a connection scheme in which input/output interface 41B is open. In FIG. 13, this connection scheme is employed by one terminal device.

In the above situation, path selection section 41D does not detect a relay path input. Therefore, path selection section 41D selects an internal path (that is, a processing path). The processing path then loops back within the terminal device.

The above automatic loopback function permits the system installation personnel to install the system with high efficiency. More specifically, the installation personnel can build the system simply by connecting the terminal devices 41 in series.

The data processing section 41E is a processing device that processes the data received via the processing path input section 41A1. The data processing section 41E is implemented as hardware or software.

The data processing section 41E performs a process in accordance with its use.

For example, the data processing section 41E acquires an audio signal from an arbitrary channel.

Further, the data processing section 41E writes data into an arbitrary channel.

Furthermore, the data processing section 41E transfers data from one channel to another.

When the above processing functions are combined, voice communication is established between arbitrary terminal devices. For example, a one-to-one call, one-to-many all call, or group call is established.

The data processing section 41E also performs a selective mixing process. This processing function can be used for output data mixing (a process for acquiring the outputs for all terminals from the inputs for all channels).

Similarly, the above processing function can be used for input data mixing (a process for acquiring the outputs for all channels from the inputs for all terminals).

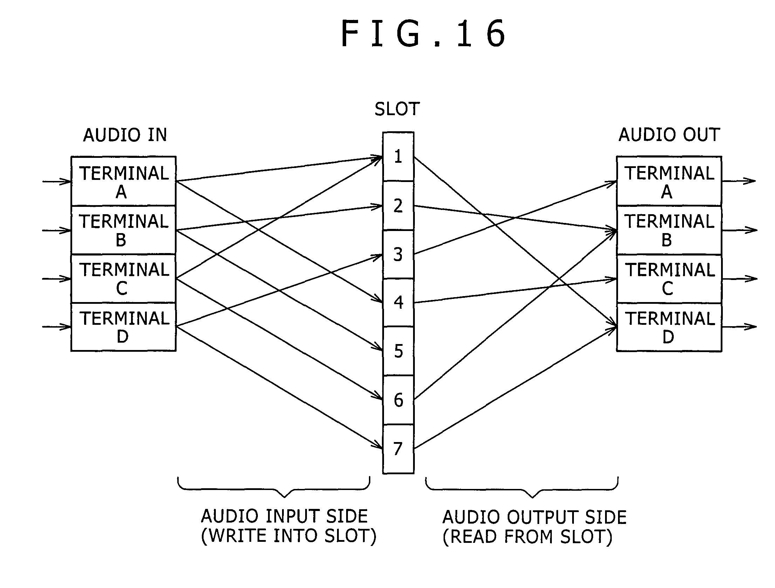

FIG. 16 shows an example of the above processing operations. The left-hand half of FIG. 16 corresponds to an input data mixing process. The right-hand half of FIG. 16 corresponds to an output data mixing process.

When an input into a single slot or terminal device is indicated by a plurality of arrows, it means that audio signals are mixed.

The data processing section 41E also performs an electronic volume process. The electronic volume process is performed on an individual channel basis.

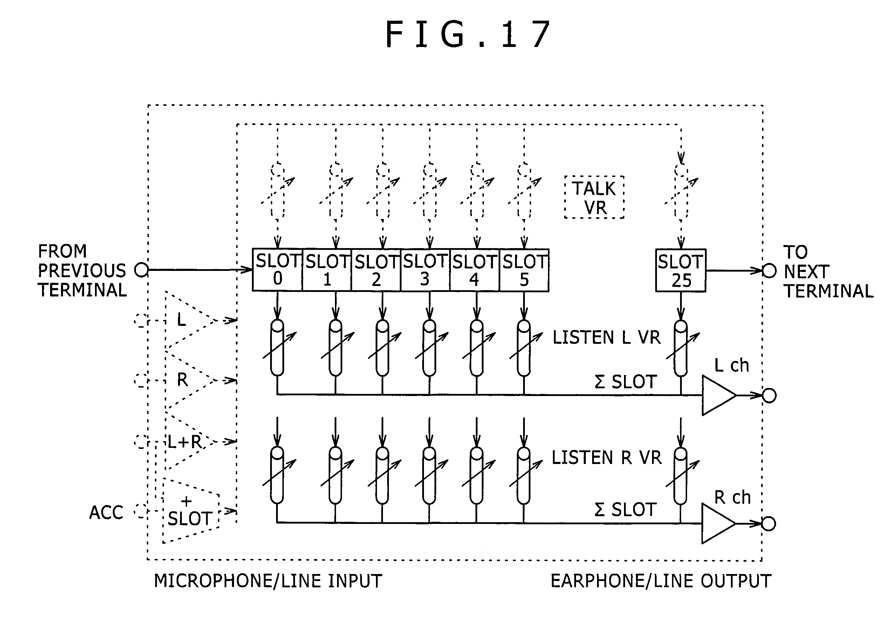

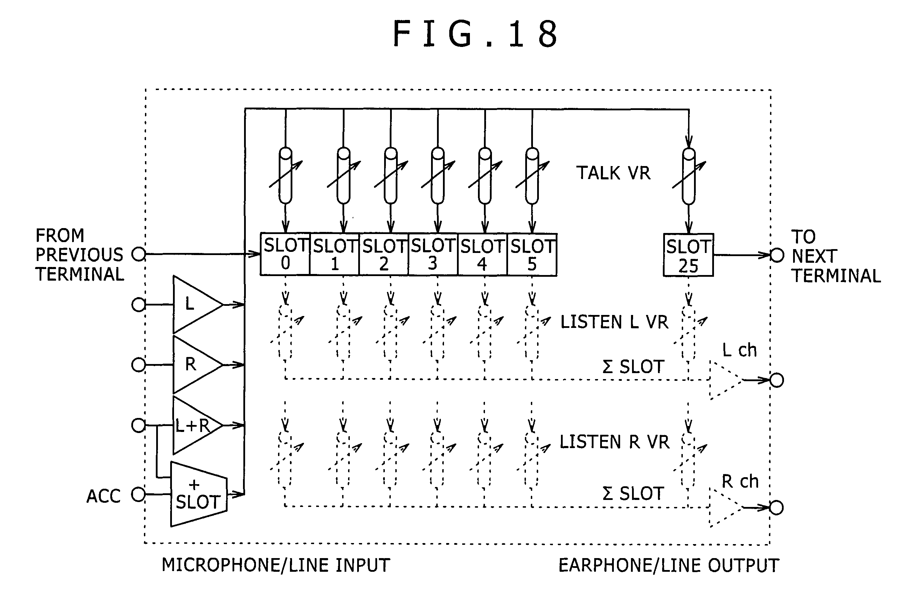

FIG. 17 illustrates a concept of an output data electronic volume process. FIG. 18 illustrates a concept of an input data electronic volume process.

It is assumed that the electronic volume value for slot k is gₖ. The value gₖ is a real number greater than zero.

FIG. 17 illustrates the addition and output of audio signals of slots on which an electronic volume process has been individually performed. The electronic volume value can be variously set for the right- and left-hand speakers.

FIG. 18 shows how audio signals on which an electronic volume process has been performed on an individual slot basis are input into corresponding slots k.

### (2) Transmission Data Structure

The transmission data structure for data transmission will now be described.

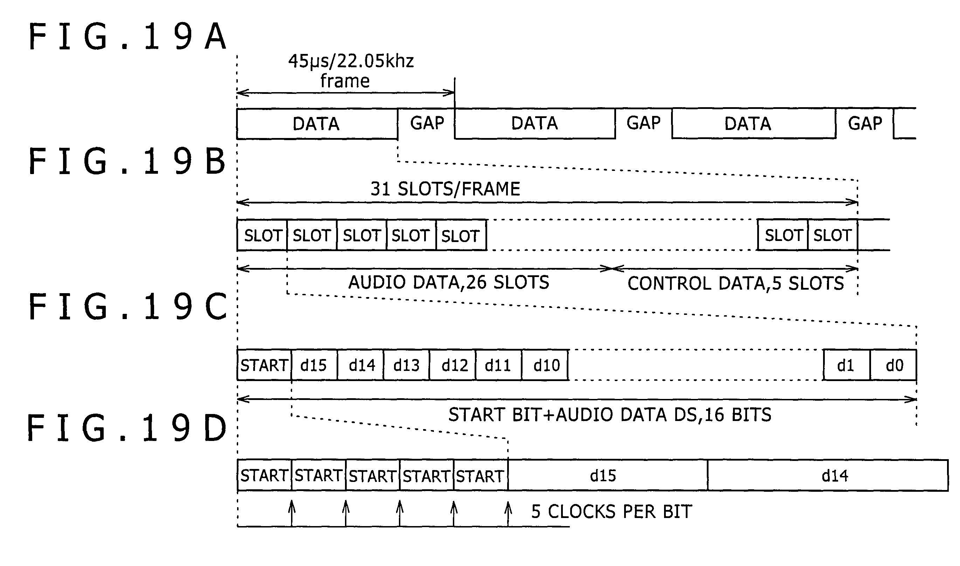

FIGS. 19 show a typical transmission data structure. In the example shown in FIGS. 19, a UART (Universal Asynchronous Receiver Transmitter) is used for transmission. The UART is not described in detail herein because it is a known asynchronous transmission technology.

Briefly speaking, the UART is a method for detecting a start bit ("0") at the beginning of data and then establishing communication by continuously reading data with an internal counter while forming a 1/0 data determination at a bit center at fixed time intervals in accordance with a predetermined number of data bits. After the predetermined number of bits are read, the UART begins to detect the start bit of the next frame.

The present embodiment assumes that the frame frequency fs is 22.05 kHz.

Each frame includes 31 slots and a fixed-length gap (data "1") (FIG. 19A).

Twenty-six slots out of a total of 31 slots are for contents (audio). The remaining 5 slots are for control (FIG. 19B).

The data length of each slot is 17 bits.

Each slot includes a 1-bit start bit ("0") and 16-bit data ds (FIG. 19C).

Each bit is 5 clocks in length (FIG. 19D). Therefore, the received signal amplitude is sampled every five clocks from the central phase of the start bit. As a result, the data bit rate is equivalent to a 1/5 clock.

### (3) Shared Screen

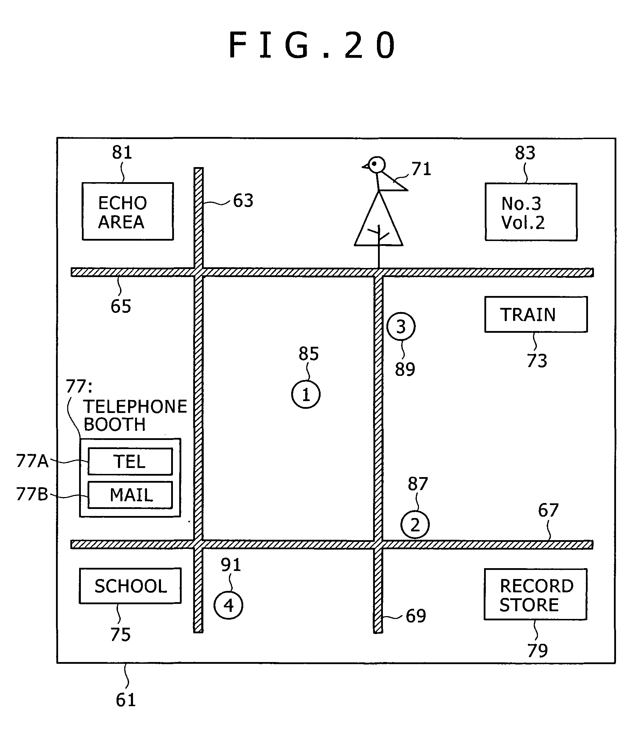

FIG. 20 shows a shared screen 61 for use with the present embodiment. The shared screen 61 is organized to depict a virtual town.

Main elements of the town are streets 63, 65, 67, 69, bird 71, train 73, school 75, telephone booth 77, record store 79, echo area 81, and monitor area 83.

These elements are designed to coordinate with a channel selection function, mixing function, and other functions.

The computer 49 controls coordinations with various functions.

The computer 49 detects symbols 85, 87, 89, 91 in the associated areas and performs a series of control operations as needed to supply functions for the areas.

For example, the computer 49 outputs control data to the associated terminal device 41 in order to specify an input/output data mixing process or volume process. A control slot is used for control data transmission.

In other words, the system users can select a necessary service by moving the symbols 85, 87, 89, 91.

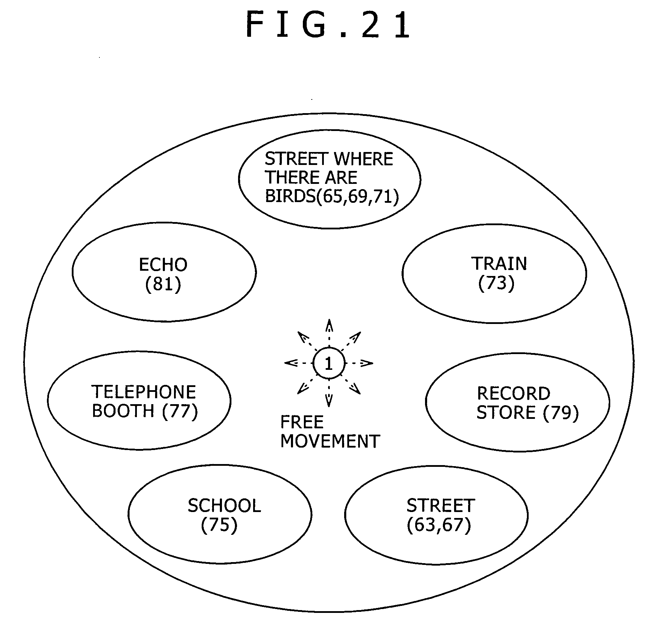

FIG. 21 shows a service selection image.

The shared screen 61 shows all the symbols corresponding to the system users. Therefore, all the system users can easily grasp the positional relationship among their own symbols and the symbols of the other users. In other words, the system users can easily grasp the system operation.

The group area function 49B, output sound volume control function 49C, output balance control function 49D, direct call function 49E, voice mail function 49F, position confirmation function 49G, monitoring function 49H, and other functions are associated with various elements.

For example, the group area function is associated with the streets 63, 65, 67, 69. A group area corresponds to a one-to-one call or group call among symbols positioned within the area. The streets 63, 65, 67, 69 are group areas that permit free entry and exit.

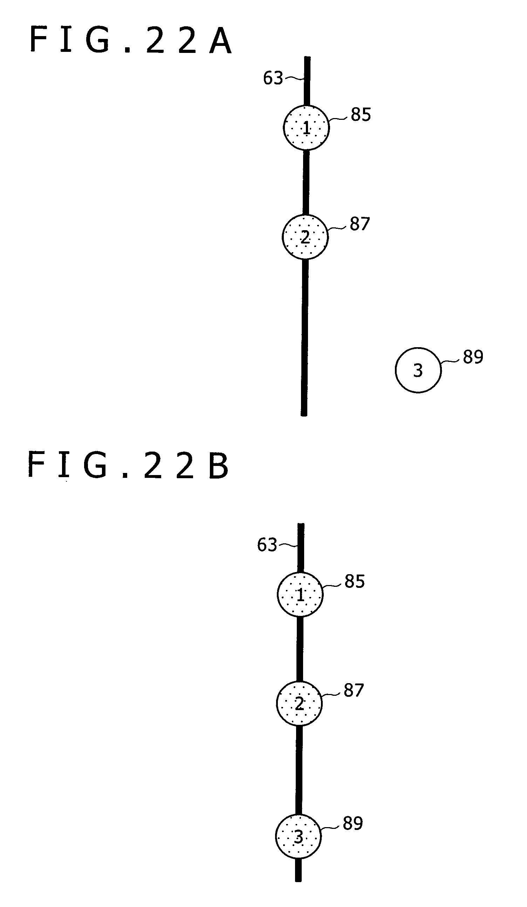

If, for instance, symbols 85 and 87 are positioned on street 63 as indicated in FIG. 22A, a one-to-one call is established between these two symbols. The channel voices corresponding to the symbols are selectively output from the other terminal device.

If, for instance, the third symbol 89 moves to street 63 as indicated in FIG. 22B, a group call is established among these three symbols. In this instance, each terminal device synthesizes channel voices corresponding to the other two terminal devices and outputs the synthesized voice.

The fact that symbols are positioned on the streets 63, 65, 67, 69 is reported to the system users by changing the symbol display format.

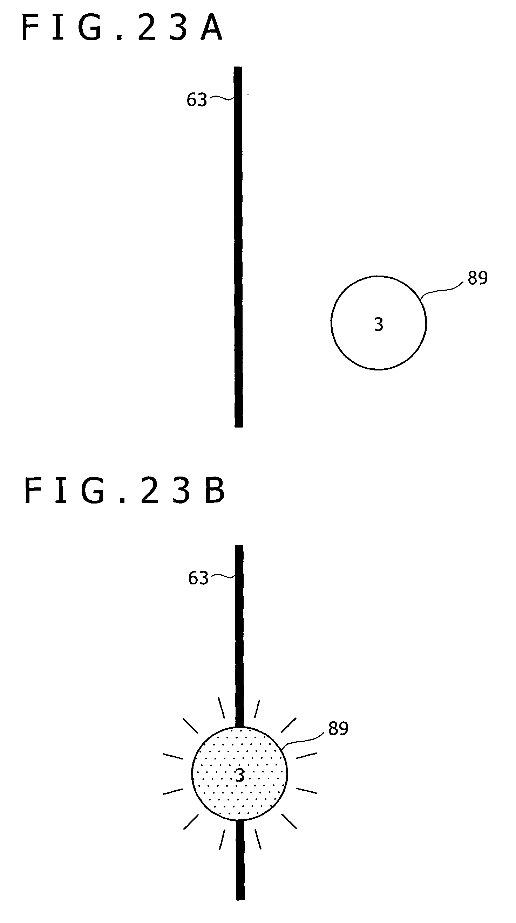

Examples are shown in FIGS. 23A and 23B. FIG. 23A indicates that a symbol is positioned outside street 63. FIG. 23B indicates that the symbol is positioned on street 63. In FIG. 23B, the symbol is shaded to indicate that the symbol is displayed in gray.

When the display color changes, the system users can visually confirm that they belong to a group area.

Further, the system users who have already belonged to a group area can visually confirm the existence of system users who have newly belonged to the group area.

The existence of a system user who belongs to the group area can be confirmed by a voice output from the speaker 45. However, all the participants do not always speak.

It is therefore important that it be possible to visually confirm the participation into the group area.

The display format can also be varied, for instance, by changing the shape (or changing the display size) or changing the symbol type.

The position information about a group area including a street is retained by the group area retention area 51D of the storage device 51.

The computer 49, which functions as a symbol position determining device, determines whether a symbol is positioned within a group area, and identifies the group area in which the symbol is positioned.

The computer 49 also functions as an output control device to select a reception channel or control the electronic volume so that the sound of another sound source concerning a symbol positioned in the same group area is heard.

In addition, an electronic volume function that matches the inter-symbol distance is employed for the streets 63, 65, 67, 69.

More specifically, the employed method is such that the electronic volume increases with a decrease in the distance between symbols and decreases with an increase in the distance between symbols.

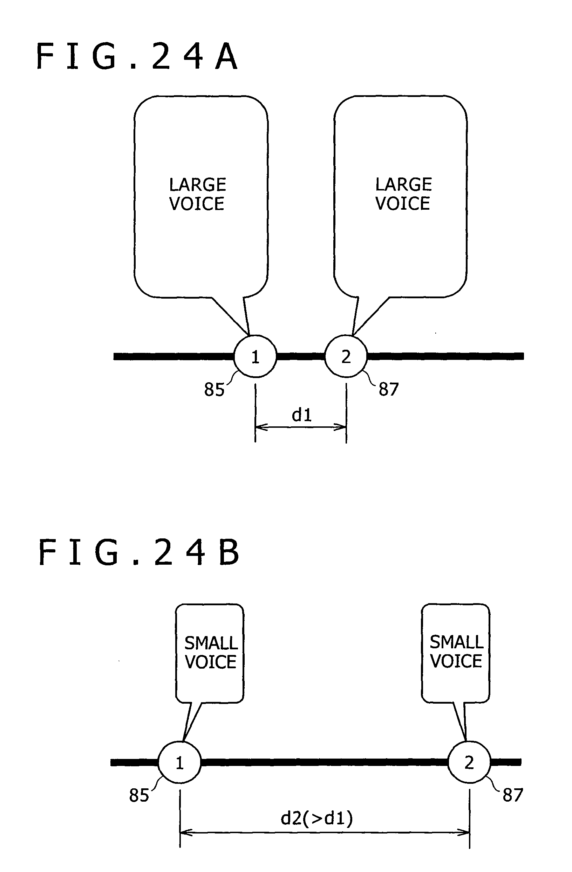

FIGS. 24A and 24B show operation images.

FIG. 24A shows an image that illustrates a case where symbols 85 and 87 are close to each other. In this case, control is exercised so that the electronic volumes for the symbols are set to a great value.

Consequently, the system users corresponding to the symbols hear a large voice from the other user. This matches the feeling existing in the real world.

FIG. 24B shows an image that illustrates a case where symbols 85 and 87 are far from each other. In this case, control is exercised so that the electronic volumes for the symbols are set to a small value.

Consequently, the system users corresponding to the symbols hear a small voice from the other user. This matches the feeling existing in the real world.

The distance d is determined by the computer 49, which functions as a distance computation device to perform a computation process.

The positions of the symbols are acquired from the symbol position storage area 51B.

The computer 49, which functions as a sound volume control device, determines the electronic volume values in accordance with the distance d.

Thanks to the above electronic volume control function, the system users can experience the same feeling as in the real world. As a result, it is easy to get a fairly accurate sense of distance in the virtual world.

In addition, an electronic volume function that matches the positional relationship among symbols is employed for the streets 63, 65, 67, 69.

More specifically, the employed function adjusts the right- and left-hand electronic volumes depending on whether another symbol in a group area is positioned to the right or left of a target symbol.

If, for instance, the other symbol is positioned to the left of the target symbol, the electronic volume for the left-hand side is increased whereas the electronic volume for the right-hand side is decreased. If, for instance, the other symbol is positioned to the right of the target symbol, the electronic volume for the right-hand side is increased whereas the electronic volume for the left-hand side is decreased.

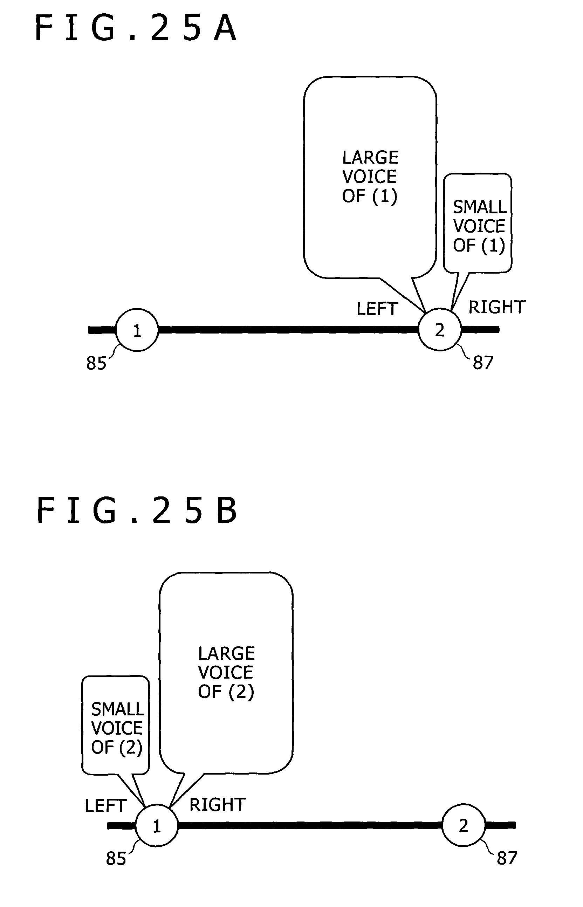

FIGS. 25A and 25B shows operation images.

FIG. 25A shows an image of an electronic volume for symbol 87. In this case, another symbol 85 is positioned to the left of symbol 87, which is to be controlled.

Therefore, an instruction for increasing the left-hand speaker electronic volume as a voice output for symbol 85 is issued to the terminal device for symbol 87.

FIG. 25B shows an image of an electronic volume for symbol 85. In this case, another symbol 87 is positioned to the right of symbol 85, which is to be controlled.

Therefore, an instruction for increasing the right-hand speaker electronic volume as a voice output for symbol 87 is issued to the terminal device for symbol 85.

The position information about the symbol for the terminal device to be subjected to electronic volume control and about another symbol positioned in the same group area is acquired by the processing function of the computer 49, which functions as a position information acquisition device. In this instance, the position of each symbol is acquired from the symbol position storage area 51B.

The positional relationship indicating whether the other symbol is positioned to the right or left of the symbol for the terminal device to be controlled is determined by the processing function of the computer 49, which functions as a positional relationship determining device.

The electronic volume value is determined in accordance with the determination result produced by the computer 49, which functions as a sound volume control device.

Thanks to the above electronic volume control function, the system users can experience the same feeling as in the real world. As a result, it is easy to determine the positional relationship in the virtual world.

The bird 71 is an indication that represents a fixed background sound source or a street to which an ambient sound is assigned. Streets in the real world are full of various sounds.

The bird indication represents the existence of the above background sound or ambient sound. For example, it represents a chirp generated by a bird or a babble of voices generated on a street.

In the present embodiment, the bird 71 is indicated in a tree at the intersection of streets 65 and 69. Therefore, the bird's chirp is heard on the terminal device corresponding to a symbol that has moved to street 65 or 69.

The bird's chirp is a fixed sound source. It means that the bird's chirp is heard from the intersection of streets 65 and 69.

Therefore, a high realistic sensation can be enjoyed when an electronic volume function based on the distance between the bird 71 and symbol is combined with an electronic volume function based on the positional relationship between the bird 71 and symbol.

The train 73 is also counted as a group area. This group area permits a one-to-one call or group call to be established between symbols positioned in the area. The train 73 is also a group area that permits free entry and exit.

In the present embodiment, the inner background sound is assigned to the train 73 as a fixed sound source. Thanks to such a background sound, the system users can enjoy a situation play under conditions similar to real-world conditions.

When the background sound is added, a system user can talk with another system user while enjoying an atmosphere.

Similarly, the school 75 is also a group area. This group area also permits a one-to-one call or group call to be established between symbols positioned in the area. The school 75 is also a group area that permits free entry and exit.

In the above case, too, a high realistic sensation can be enjoyed when particular sounds are employed for various locations within a campus as background sounds. The present embodiment assumes that no such background sounds are used.

The telephone booth 77 is an area that provides one-to-one communication. The communication based on the use of the telephone booth 77 can be established even when a destination symbol is positioned in a group area. When direct communication is established, the destination system user is temporarily separated from the group area.

In the present embodiment, a direct call request area 77A and voice mail area 77B are provided for the telephone booth 77.

The location of the direct call request area 77A is stored in the direct call request area storage area 51E. In the present embodiment, the direct call request area 77A is implemented as a part of the function of the storage device 51.

This direct call function is initiated when the information for identifying the symbol positioned in the direct call request area 77A is acquired. The computer 49 functions as an identification information acquisition device.

A direct call can be established when the information for identifying the destination terminal device is input. For example, a direct call can be established when the identification number of the destination symbol is entered.

In accordance with the input information, the computer 49 acquires the information for identifying the destination terminal device. This identification information acquisition device function is also provided by the computer 49.

The present embodiment incorporates a display format change function for changing the display format of a symbol that is designated as a destination. This function is also provided by the computer 49.

All the system users, including the parties concerned, are notified, for instance, by changing the display color for the target symbol, blinking the target symbol, or changing the shape of the target symbol.

This function is also a part of a scheme for permitting all the system users to share information.

Meanwhile, the location of the voice mail area 77B is stored in the voice mail area storage area 51F. This area is also implemented as a part of the storage device 51.

The voice mail function is initiated when the information for identifying the symbol positioned in the voice mail area 77B is acquired. The computer 49 functions as an identification information acquisition device.

Voice mail can be transmitted when the information for identifying the destination terminal device is input. For example, Voice mail can be transmitted when the identification number of the destination symbol is entered.

In accordance with the input information, the computer 49 acquires the information for identifying the destination terminal device. This identification information acquisition device function is also provided by the computer 49.

The present embodiment incorporates a display format change function for changing the display format of a symbol that is designated as a destination. This function is also provided by the computer 49.

All the system users, including the parties concerned, are notified, for instance, by changing the display color for the target symbol, blinking the target symbol, or changing the shape of the target symbol.

In the present embodiment, the destination user moves to the voice mail area and confirms the voice mail addressed to the destination user.

The record store 79 is an area where an audio file, which is stored for public release, can be freely reproduced. The location of the record store 79 is also stored in a part of the storage device 51.

The system users and system administrator can freely register audio files in the record store 79.

The present embodiment is such that a list of selectable file names appears when a symbol moves to the record store 79. The system user can choose a listing to reproduce a file and confirm the contents of the file.

The echo area 81 is an area where the system users can confirm a produced sound. When a sound is produced with a symbol moved into the echo area 81, the produced sound is echoed back.

The monitor area 83 is a display area that a user having monitoring privileges uses to announce a currently monitored terminal device.

Thanks to the existence of this display area, the system users are able to know what terminal device is being monitored.

This monitoring function is also provided by the computer 49, which serves as a sound source information collection device.

The computer 49 collects the information about the output situation (output conditions) of a monitoring target and reproduces the same sound. The sound volume control device exercises sound volume control for sound reproduction purposes. In the present embodiment, output sound monitoring is accomplished by entering the reproduction of a terminal device output sound into a dedicated monitoring channel.

The shared screen 61 also incorporates a position confirmation function. The position confirmation function is incorporated so that the system users can view the screen contents to confirm the positions of the locally controlled symbol and others.

Upon receipt of a position confirmation request from a terminal device 41, the computer 49 acquires the position of a request target symbol or element from the material information storage area 51A or symbol position storage area 51B.

In the above instance, the computer 49 functions as a position information acquisition device. When the position information is acquired, the computer 49 uses a display format change device function to change the display format of the corresponding symbol.

For example, the computer 49 changes the symbol display color, blinks the symbol, or changes the symbol shape.

### (4) Operation Examples

Operation examples corresponding to various processing functions will now be described.

### (4-1) Startup Process

When the program starts, the computer 49 resets the electronic volumes of all terminal devices connected to the transmission path to 0 (zero). This control information is transmitted to all the terminal devices via a control slot (control channel).

Next, the computer 49 instructs a parent terminal device 41 (leftmost one in FIG. 4) to deliver a reproduction output of an audio file (Bird.wav) to a "bird voice channel."

This audio file is repeatedly output. At the same time, control is exercised so as to increase the input sound volume for the associated slot so that a bird's voice is heard on the "bird voice channel."

Similarly, the computer 49 instructs the parent terminal device 41 to deliver a reproduction output of an audio file (Driver.wav) to an "in-vehicle broadcast channel."

This audio file is also repeatedly output. At the same time, control is exercised so as to increase the input sound volume for the associated slot so that an in-vehicle broadcast is heard on the "in-vehicle broadcast channel."

Further, the computer 49 instructs the parent terminal device 41 to deliver a reproduction output of an audio file (Bell.wav) to a "telephone bell channel."

This audio file is also repeatedly output. At the same time, control is exercised so as to increase the input sound volume for the associated slot so that a bell sound is heard on the "telephone bell channel."

All the above sounds can be heard when the associated channel is chosen by a terminal device 41.

### (4-2) Symbol Move Process

A symbol can be moved when an operating control signal is entered from a terminal device 41 or computer 49.

The present embodiment assumes that a pointing device is used to enter move information. A joystick, mouse, or other pointing device may be used. The direction and amount of pointing device operation determine the direction and amount of a symbol move.

When the terminal device 41 is used to specify the move of a symbol, the move information is conveyed to the computer 49 in the form of control data (control packet).

The computer 49 functions as a symbol move control device. The computer 49 updates the position information about the symbol in accordance with the move information. As a result, the on-screen symbol moves accordingly.

The above also holds true when the computer 49 specifies the move of a symbol.

### (4-3) Stop Position Confirmation Process

To select a channel for a terminal device or specify the control of an electronic volume, it is necessary to know the stop position of a symbol. The present embodiment determines the symbol stop position as described below.

For example, a determination is formulated in accordance with the symbol position prevailing when a system user releases the joystick or in accordance with the symbol position prevailing when the system user drops the mouse.

If the symbol position is within a specified processing range, the display format is changed. For example, the symbol's background color is changed.

If, on the other hand, the symbol position is outside the specified processing range, control is exercised so as to reset all electronic volumes to 0 (zero). At the same time, the display format is initialized. For example, the background color is initialized.

Therefore, the symbol can freely move within the shared screen. In a group area or other area to which a call function is not allocated, however, control is exercised so that no sound can be generated.

More specifically, control is exercised so that the voice of a system user who operates a terminal device 41 is not audible to the other system users.

The system user of a symbol outside the specified processing range cannot hear the voices of the other system users.

If another process is performed before the move is specified, a new process begins after all the volumes are reset to 0 (zero).

### (4-4) Process for a "Street" (No Background Sound)

In a "street," a call function is set for terminal devices whose symbols are on the same line. Further, the right-/left-hand electronic volume control function is set in accordance with the distance and positional relationship between the symbols.

Assumably, the symbol position determining device (computer 49) has exercised the stop position confirmation function to confirm that the symbols are on the "street."

The symbol for the terminal device to be controlled is referred to as symbol #1, whereas the other symbol positioned on the same "street" is referred to as symbol #2.

In this instance, the computer 49, which functions as a distance computation device, determines the distance between symbol #1 (control target) and symbol #2 by computing the distance between the centers of the symbols. The symbol positions stored in the symbol position storage area 51B are used for this computation operation.

Further, the computer 49 determines whether symbol #2 is positioned to the right or left of symbol #1.

If the on-screen "street" is extended in the vertical direction, the computer 49 also determines whether symbol #2 is positioned above or below symbol #1.

If symbol #2 is positioned to the right of symbol #2, the computer 49 instructs symbol #1 to raise the right-hand speaker output volume of a dedicated channel for symbol #2. It goes without saying that the sound volume is adjusted in accordance with the distance. The same also holds true in the other cases.

If, on the other hand, symbol #2 is positioned to the left of symbol #2, the computer 49 instructs symbol #1 to raise the left-hand speaker output volume of the dedicated channel for symbol #2.

If symbol #2 is positioned upward in the figure, the computer 49 instructs symbol #1 to raise the left-hand speaker output volume of the dedicated channel for symbol #2.

If symbol #2 is positioned downward in the figure, the computer 49 instructs symbol #1 to raise the right-hand speaker output volume of the dedicated channel for symbol #2.

Meanwhile, symbol #2 needs to be controlled in an opposite direction because the up/down/left/right positional relationship for symbol #2 is the reverse of the positional relationship for symbol #1.

The computer 49 repeatedly performs the above process for all the symbols positioned on the same "street."

### (4-5) Process for a "Street" (Background Sound Provided)

This process is performed for a "street" where the chirp of the bird 71 is heard. One dedicated channel is allocated to the bird's chirp, which is a fixed sound source.

On the "street," the bird's chirp is added as a background sound when a call is established between terminal devices whose symbols are positioned on the same line. Therefore, the inter-symbol call function involves the same process as described earlier.

The process performed for the bird's chirp will now be described. It is basically the same as an inter-symbol process. However, the bird's chirp is a system sound. Therefore, the right- and left-hand sound volume adjustments are made in relation to the terminal devices only.

In the above instance, the computer 49, which functions as a distance computation device, determines the distance between symbol #1, which is a control target, and the center of a tree where there is the bird 71.

Further, the computer 49 determines whether the tree is positioned to the right or left of symbol #1.

If the on-screen "street" is extended in the vertical direction, the computer 49 also determines whether the tree is positioned above or below symbol #1.

The electronic volume control method is the same as for inter-symbol control. More specifically, the electronic volume is controlled in accordance with the positional relationship and distance.

### (4-6) Process for a "Street" Corner (Intersection)

This process is performed when a symbol is positioned at the intersection of one "street" and another. This process needs to be performed when a symbol is positioned at the intersection of a "street" that is extended horizontally within the shared screen 61 and a "street" that is vertically extended.

When a symbol is at the intersection, two or more intersecting "streets" are examined to check for the other symbols. If any other symbol exists, the positional relationship and distance between the symbols are confirmed. The computer 49 then exercises electronic volume control in accordance with the distance and positional relationship.

More specifically, the computer 49 determines whether the group call destination symbol is positioned to the right or left of, above, or below the terminal device to be controlled. Further, the computer 49 computes the distance between the terminal device to be controlled and each destination symbol.

The electronic volume control operation for the terminal device to be controlled is then determined.

If a bird's chirp or other background sound (ambient sound) exists in the "street," the control operation is determined in accordance with the distance and position relationship to such a sound source.

Consequently, the speaker 45 of the terminal device 41 to be controlled outputs a sound that is obtained by mixing individual channel sounds whose volumes are individually adjusted.

### (4-7) Process for a Train

The train 73 is also a group area as is the case with a "street." For a "street," a group area is given as a line. For the train 73, however, a group area is given as a plane. Therefore, the same process as for a "street" can be applied to the train 73.

As regards a conversation within the train 73, it is difficult to get a fairly accurate sense of distance and positional relationship.

In the present embodiment, therefore, the electronic volume process according to the distance or positional relationship is not performed. More specifically, a method for allocating a mix channel to the train 73 is employed.

A dedicated mix channel allocated to the train 73 is referred to as a "train channel."

The computer 49 instructs a terminal device 41 within the area to raise the output sound volume of a received "train channel." A conversation sound existing within the train is then heard on the speaker 45.

The computer 49 also issues instructions so as to raise the volume of an audio input into the "train channel," thereby ensuring that the voices of various terminals are multiplexed within the "train channel." Voices can then be transmitted to terminal devices positioned in the train. It should be noted that the input of each voice into the "train channel" is multiplexed.

A dedicated channel is allocated to an in-vehicle broadcast, which is an ambient sound unique to the train 73.

Therefore, the computer 49 instructs all terminal devices within the train to raise the output sound volume of a received "in-vehicle broadcast channel."

As a result, the speaker 45 on each terminal device 41 outputs a sound that is obtained by mixing the in-vehicle broadcast with the voices of the other terminal devices.

### (4-8) Process for a School

The school 75 is also a group area. For the school 75, a group area is defined as a plane. Therefore, the same process as for a "street" can be applied to the school 75. In the present embodiment, however, the same process is applied to the school 75 and train 73.

More specifically, a dedicated mix channel is allocated to the school 75, and the aforementioned process is applied to the school 75.

As regards the process for the school 75, the mix channel is referred to as the "school channel."

Further, a dedicated channel is allocated to an ambient sound of the school. Setup may be performed so as not to use the ambient sound of the school. The same also holds true for the aforementioned train.

Eventually, the speaker 45 on each terminal device 41 outputs a sound that is obtained by mixing the voices of terminal devices whose symbols are positioned in the school 75.

### (4-9) Process for Direct Call Function (Call Initiation Process)

The process performed when a symbol is positioned in the direct call request area 77A of the telephone booth 77 will now be described. The operating/processing steps are sequentially described below.

When a symbol enters the direct call request area 77A, the computer 49 displays a window that imitates a telephone.

A system user enters a destination number that is to be called. A numeric keypad or other input device 47 connected to a terminal device 41 is used to enter the number.

The computer 49 receives the destination number as control data, and then displays the received destination number within the on-screen window.

Next, the computer 49 determines whether a communication button on the direct-call-requesting terminal device is operated. The communication button corresponds to a telephone hook button. When pressed downward, the communication button invokes an off-hook state. When pressed upward, the communication button invokes an on-hook state. When the communication button is operated in this manner, the destination number is finalized so that a connection process starts.

When the communication button operation is confirmed, the computer 49 transmits the control data to a terminal device corresponding to the destination number, and raises the output sound volume of the "telephone bell channel." The "telephone bell channel" is a dedicated channel.

At the same time, the computer 49 transmits the control data to the terminal device corresponding to the destination number, and causes an LED or other light-emitting element of the terminal device to blink. It should be noted that the light-emitting element is allocated to the telephone blinks.

The computer 49 determines whether the communication button on the terminal device corresponding to the destination button is operated.

When the communication button operation is confirmed, the computer 49 transmits the control data to the terminal device corresponding to the destination number and sets the output sound volume of the "telephone bell channel" to zero (0). At the same time, the computer 49 stores the channel state of the terminal device corresponding to the destination number. The stored channel state is used to revert to the current state immediately after the call.

Subsequently, the computer 49 exercises control so that the light-emitting elements on the call-requesting terminal device and the terminal device corresponding to the destination number steadily glow.

Further, the computer 49 changes the background color of the symbols corresponding to the two terminal devices that have established the call to red.

All the system users, including those who are involved in the call, can then confirm a busy state.

Subsequently, the computer 49 transmits the control data to both terminal devices and exercises control so as to raise the input sound volume of the dedicated channel for each of the terminal devices. In this instance, the input levels for channels other than the dedicated channel for each terminal device are set to zero (0).

Further, the computer 49 transmits the control data to both terminal devices and exercise control so as to raise the output sound volume of the dedicated channel for the other terminal device. In this instance, the output levels for channels other than the dedicated channel for each terminal device are set to zero (0).

The direct call is now established between the terminal devices.

### (4-10) Process for Direct Call Function (Disconnection Process)

The process for terminating a direct call will now be described. The direct call termination process starts when a communication button operation at either of the involved terminal devices is detected during a call.

When the communication button operation is confirmed, the computer 49 instructs both terminal devices to set the input sound volumes of their dedicated channels to zero (0).

Further, the computer 49 instructs both terminal devices to set the output sound volume of a dedicated channel for the other terminal device to zero (0).

The direct call is then terminated.

The computer 49 also transmits control data to both terminal devices and exercises control so as to extinguish the call-indicating light-emitting elements.

Further, the computer 49 restores the background colors of both symbols to the original colors.

Subsequently, the computer 49 recovers the channel state of a terminal device corresponding to the destination number, which was stored at the beginning of the direct call.

In other words, the computer 49 gives control data to a terminal device corresponding to the destination number in order to specify channel input/output relationship.

Finally, the window imitating a telephone disappears from the screen.

### (4-11) Voice Mail Registration Process

The process performed when a symbol is positioned in the voice mail area 77B of the telephone booth 77 will now be described. The operating/processing steps are sequentially described below.

When a symbol enters the voice mail area 77B, the computer 49 erases a window that imitates a telephone.

A system user enters a destination number that represents the voice mail destination. A numeric keypad or other input device 47 connected to a terminal device 41 is also used to enter the number.

The computer 49 receives the destination number as control data, and then displays the received destination number within the on-screen window.

Next, the computer 49 determines whether a mail button on the transmission -requesting terminal device is operated.

When the mail button operation is confirmed, the computer 49 instructs the transmission-requesting terminal device to raise the input sound volume of its dedicated channel.

At the same time, the computer 49 instructs the transmission-requesting terminal device to raise the output sound volume of its dedicated channel.

The above operations are performed to ensure that the system users can confirm their voices during recording.

The computer 49 changes the background color of a symbol corresponding to the transmission source to red in order to indicate that a recording operation is being performed.

Further, the computer 49 receives voice data through the dedicated channel and stores it in the memory area as voice mail.

### (4-12) Voice Mail Registration Termination Process

The process performed to terminate a voice mail registration process will now be described.

When a mail button operation performed by a system user is detected, the computer 49 instructs a transmission-requesting terminal device to set the input sound volume of its dedicated channel to zero (0).

The computer 49 then stores the voice data, which was previously stored in the memory area, as a voice file (e.g., WAV file) that is addressed to a terminal device identified by the destination number.

Next, the computer 49 recover the original background color for the transmission-requesting symbol and changes the symbol background color of the destination to gray.

Also, control is exercised so as to blink the light-emitting element on the destination terminal device for which the voice mail is registered.

It goes without saying that the light-emitting element is allocated to voice mail blinks.

The above operations are performed to ensure that all system users can visually confirm the symbol for which the voice mail is registered.

Further, the light-emitting element on the destination system user's terminal device blinks to indicate that the voice mail is registered.

### (4-13) Voice Mail Reception Process

The process performed to receive voice mail will now be described.

A voice mail reproduction operation starts when a symbol corresponding to the terminal device designated as a voice mail destination moves to the voice mail area.

When a symbol's move to the voice mail area is detected, the computer 49 erases the window imitating a telephone.

The computer 49 determines whether the mail button is operated at the voice mail destination terminal device.

When the mail button operation is confirmed, the computer 49 changes the background color of the symbol positioned in the main area to green.

Next, the computer 49 determines whether the voice mail addressed to a terminal device corresponding to the symbol exists.

If the voice mail exists, the computer 49 reproduces a registered voice file (WAV file) to deliver it to a voice mail channel. The voice mail channel is a dedicated channel.

Further, the voice mail destination terminal device is instructed to raise the output sound volume of the voice mail channel.

The above operation is performed to ensure that the system user at the destination can confirm the voice mail.

### (4-14) Voice Mail Reproduction Termination Process

The process performed to terminate a voice mail reproduction operation will now be described.

The computer 49 determines whether the mail button is operated at a terminal device in which voice mail is being reproduced.

When the mail button operation is confirmed, the computer 49 closes the WAV file. In other words, the computer 49 stops transmitting the voice mail to the "voice mail channel."

Subsequently, the computer 49 instructs the terminal device in which the voice mail was reproduced to set the output sound volume of the "voice mail channel" to zero (0).

Further, the computer 49 recovers the original background color of the symbol positioned in the mail area.

At the same time, the computer 49 instructs the terminal device in which the voice mail was reproduced to extinguish the light-emitting element that is allocated to voice mail.

Finally, the window imitating a telephone disappears from the screen.

### (4-15) Process for Record Store (Start of Reproduction)

The process performed when a symbol is positioned in the record store 79 will now be described. The operating/processing steps are sequentially described below.

When it is confirmed that a symbol is positioned in the record store 79, the computer 49 causes the shared screen 61 to display a window for music selection.

A system user uses a numeric keypad or other input device 47 connected to a terminal device to enter the number of a desired piece of music.

The computer 49 receives the number as control data and displays the received number within the on-screen window.

Next, the computer 49 determines whether a reproduction button is operated at a terminal device that makes a request for music reproduction. The reproduction button is operated to finalize a music selection.

When the reproduction button operation is confirmed, the computer 49 reproduces the associated music file (WAV file) and raises the output sound volume of a "record store channel." The "record store channel" is a dedicated channel.

Further, the computer 49 switches to a screen for indicating that reproduction is in progress.

### (4-16) Process for Record Store (End of Reproduction)

The process performed to terminate a music reproduction operation will now be described.

The computer 49 determines whether the reproduction button is operated at a terminal device at which a music file is reproduced.

When the reproduction button operation is confirmed, the computer 49 closes the music file (WAV file).

Next, the computer 49 instructs the terminal device for music file reproduction to set the output sound volume of the "record store channel" to zero (0).

Subsequently, the computer 49 switches to a screen that accepts a music selection.

### (4-17) Echo Function Process

The process performed when a symbol is positioned in the echo area 81 will now be described. The operating/processing steps are sequentially described below.

First of all, a voice recording process will be described.

When it is confirmed that a symbol is positioned in the echo area 81, the computer 49 changes the background color of the symbol to red.

The computer 49 instructs the associated terminal device to raise the input sound volume of its "dedicated channel."

As the same time, the computer 49 instructs the associated terminal device to raise the output sound volume of its "dedicated channel."

The above operations are performed to ensure that the system user can confirm the voice that is generated and recorded by the system user.

When the input sound volume exceeds a certain value (that is, when a generated voice is detected), the computer 49 stores the received voice data in its memory area.

Next, a voice reproduction process will now be described.

When the input sound volume decreases below a certain level (the end of voice generation is confirmed when a no-sound state persists for a period of 2 seconds), the computer 49 delivers the voice data, which has been stored in the memory area, to an "echo channel." The echo channel is a dedicated channel.

Further, the computer 49 changes the symbol background color to green to state the start of voice data reproduction.

Finally, a termination process will be described.

When voice data reproduction ends, the computer 49 instructs the associated terminal device to set the input sound volume of its "dedicated channel" to zero (0).

Subsequently, the computer 49 recovers the original background color of the associated symbol.

### (4-18) Position Confirmation Function Process

The process for the position confirmation function will now be described. The operating/processing steps are sequentially described below.

A system user operates one of a plurality of guide buttons allocated to the position confirmation function. This input procedure is performed with a numeric keypad or other input device 47 connected to a terminal device 41.

The computer 49 receives a guide button number as control data and displays the associated number at a location corresponding to the guide button number. For example, the computer 49 changes the background color of the associated location to orange and gives a blinking indication.

When the end of the guide button operation performed by the system user is detected (when the release of the system user's finger is detected), the computer 49 recovers the original number indication for the associated location.

This function enables the system user who operated the guide button to confirm the location corresponding to the guide button through the shared screen 61.

Some guide buttons are unique to the individual terminal devices (e.g., buttons for displaying the associated symbols), whereas the other guide buttons are common to all the terminal devices (e.g., buttons for displaying a train or school).

The information indicating the relationship between the guide buttons and the particular items of position information to be displayed is preregistered in the computer 49. The registration information is stored, for instance, in the storage device 51.

### (4-19) Monitoring Function

The process for the monitoring function will now be described. The operating/processing steps are sequentially described below.

A person who operates the computer 49 uses the monitoring function to confirm a channel sound that a particular terminal device is listening to.

In this instance, the person who operates the computer 49 selects the number of a symbol that is to be monitored on screen. The selected symbol number appears in the monitor area 83.

All system users are then allowed to visually confirm the number of a currently monitored symbol.

The computer 49 acquires the information about the output state of a terminal device corresponding to the selected symbol. For example, the computer 49 acquires the information about a channel whose output sound volume is raised.

The person who operates the computer 49 determines the output sound volume for the speaker by using an on-screen sound volume switch. The output sound volume value appears in the monitor area 83.

The computer 49 instructs a monitoring target terminal device to deliver the previously acquired channel sound to a "monitoring channel" at a volume designated by the sound volume switch. The "monitoring channel" is a dedicated channel.

When the above process is completed, the person who operates the computer 49 can monitor a sound that is output from a terminal device.

### (5) Advantages of Embodiment

The shared screen described above and the functions coordinated with the shared screen are employed so that all system users can readily confirm the system operation.

Further, the system users can actively reposition a symbol to establish live audio communication and experience a simulation.

For live audio communication and simulation, the system users simply have to move a symbol.

When, for instance, a symbol is moved to a street 63, 65, 67, 69, train 73, or school 75, which are positioned in a virtual world, the system users can establish a group call.

When, for instance, a symbol is moved to the telephone booth 77, the system users can establish a one-to-one direct call or use voice mail.

Since no complicated procedures need be performed as described above, an easy-to-use audio signal transmission system can be established for all age groups.

Further, a function for controlling the output sound volume of a terminal device in accordance with the distance between sound sources is incorporated so as to enhance the sense of reality of a move within a virtual world.

Similarly, a function for individually controlling the right- and left-hand output sound volumes of a terminal device in accordance with the positional relationship between sound sources is incorporated so that a fairly accurate sense of positional relationship can be acquired within a virtual world. In other words, it is possible to enjoy a conversation within a virtual world in a manner similar to the one in the real world.

Furthermore, an ambient sound specific to a location within a virtual world can be mixed with a conversation sound and output. Therefore, a high realistic sensation can be enjoyed. This feature is effective for a simulation play.

### (6) Other Embodiments

(a) The foregoing embodiment has been described on the assumption that the computer 49, which functions as a server, incorporates the control and storage functions for the terminal devices and display screens.
   However, all or some of the above functions may alternatively be incorporated in the terminal devices.
   For example, the material information composing a virtual world may be incorporated in each terminal device so that each terminal device individually reflects the move of a symbol corresponding to another terminal device in the displayed contents.
   Further, each terminal device may individually make a channel selection and exercise electronic volume control. When this scheme is employed, it is possible to create a system configuration in which no server is used. In addition, the amount of control data flow in a transmission path can be reduced due to process disintegration.
(b) In the foregoing embodiment, the shared screen is displayed on the computer screen. However, the shared screen may be individually displayed on a display device that is connected to each terminal device. When this scheme is employed, it is possible to overcome location limitations. More specifically, the system users can use the system at any place.
(c) In the foregoing embodiment, the path automatic loopback function is incorporated in each terminal device. However, an alternative is to use a path loopback terminal device and a path junction terminal device.
(d) The terminal device configured as indicated in FIG. 14 is applied to the foregoing embodiment. However, an information processing device having a voice input/output function may be applied to the present invention without regard to the product style.
   For example, the present invention can also be applied to a computer, a TV conference terminal device, a language learning terminal device, a video camera, a digital camera, a game machine, a mobile information terminal (mobile computer, cellular phone, portable game machine, electronic book, etc.), a clock, an image reproduction device (optical disk drive, home server, etc.), or a processing board or processing card incorporating the functions according to the present invention.
(e) It should be understood by those skilled in the art that various modifications, combinations, subcombinations, and alterations may occur depending on design requirements and other factors insofar as they are within the scope of the appended claims or the equivalents thereof.

## Claims

1. An audio signal transmission system for allowing a plurality of network terminal devices to share channels that are allocated to various sound sources, the audio signal transmission system comprising:
a network terminal device corresponding to one sound source;
a material information storage device for storing material information constituting a virtual world;
a symbol position storage device for storing a symbol moving in the virtual world and the position information about the symbol;
a relationship storage device for storing the relationship between said symbol and a network terminal device;
a symbol move control device for controlling the move of a symbol in accordance with the associated control data received from each network terminal device; and
an image display device for displaying an image combination of various symbols and the virtual world as a shared screen.

2. The audio signal transmission system according to claim 1, further comprising:
a group area retention device for retaining the position information about a group area that is set for the virtual world;
a symbol position determining device for determining whether a symbol corresponding to a network terminal device is positioned in at least one group area; and
a sound volume control device, which, when a symbol corresponding to a network terminal device is positioned in a group area, controls the output sound volume of another sound source positioned in the same group area.

3. The audio signal transmission system according to claim 2, wherein, when two sound sources exist in a group area, said sound volume control device controls the output of another sound source that is generated by a network terminal device corresponding to a symbol.

4. The audio signal transmission system according to claim 2, wherein, when three sound sources exist in a group area, said sound volume control device controls the superposed output of the other sound sources that is generated by a network terminal device corresponding to a symbol.

5. The audio signal transmission system according to claim 2, further comprising:
a display format change device for changing the display format of a symbol positioned in said group area to a display format differing from a case where the symbol is positioned outside the group area.

6. The audio signal transmission system according to claim 1, further comprising:
a symbol corresponding to the network terminal device to be controlled;
a distance calculation device for calculating the distance to a sound source other than the network terminal device to be controlled within the virtual world; and
a sound volume control device for controlling the output sound volume of another sound source that is generated by the network terminal device to be controlled.

7. The audio signal transmission system according to claim 1, further comprising:
a position information acquisition device for acquiring a symbol corresponding to the network terminal device to be controlled and the position information about a sound source other than the network terminal device to be controlled;
a positional relationship determining device for determining whether another sound source is positioned to the right or left of a symbol corresponding to the network terminal device to be controlled;
a sound volume control device for controlling, in accordance with the determination result, the right- and left-hand output sound volumes of another sound source that are provided by the network terminal device to be controlled.

8. The audio signal transmission system according to claim 1, further comprising:
a direct call request area storage device for storing the position information about a direct call request area;
a first identification information acquisition device for acquiring the information for identifying a network terminal device that corresponds to a symbol positioned in the direct call request area;
a second identification information acquisition device for acquiring the information for identifying a network terminal device that is designated as a direct call destination; and
a display format change device for changing the display format for a symbol corresponding to the network terminal device designated as the direct call destination to a display format differing from a format prevailing before designation.

9. The audio signal transmission system according to claim 1, further comprising:
a voice mail area storage device for storing the position information about a voice mail area;
a first identification information acquisition device for acquiring the information for identifying a network terminal device that corresponds to a symbol positioned in the voice mail area;
a second identification information acquisition device for acquiring the information for identifying a network terminal device that is designated as a voice mail destination; and
a display format change device for changing the display format for a symbol corresponding to the network terminal device designated as the voice mail destination to a display format differing from a format prevailing before designation.

10. The audio signal transmission system according to claim 1, further comprising:
a position information acquisition device for accessing said symbol position storage device to acquire the position information about a symbol corresponding to a network terminal device from which a position confirmation request has been transmitted; and
a display format change device for changing the display format for a symbol in acquisition position to a display format differing from a format prevailing before position confirmation request transmission.

11. The audio signal transmission system according to claim 1, further comprising:
a sound source information collection device for acquiring the information about a sound source output state prevailing in a network terminal device that is designated as a monitoring target; and
a sound volume control device for controlling the output sound volume of each sound source in accordance with the acquired information.

12. An audio signal transmission method for using a plurality of network terminal devices to receive audio signals that are generated by various sound sources, the audio signal transmission method comprising the steps of:
acquiring the relationship between a symbol moving within a virtual world and a network terminal device from a relationship storage device;
controlling the move of a symbol in accordance with the associated control data that is received from each network terminal device that serves as a sound source; and
displaying an image combination of various symbols and the virtual world on an image display device as a shared screen.

13. A server constituting an audio signal transmission system for using a plurality of network terminal devices to receive audio signals that are generated by various sound sources, the server comprising:
a material information storage device for storing material information constituting a virtual world;
a symbol position storage device for storing a symbol moving in the virtual world and the position information about the symbol;
a relationship storage device for storing the relationship between said symbol and a network terminal device;
a symbol move control device for controlling the move of a symbol in accordance with the associated control data received from each network terminal device that serves as a sound source; and
an image output device for outputting an image combination of various symbols and the virtual world as a shared screen.

14. A network terminal device constituting an audio signal transmission system for using a plurality of network terminal devices to receive audio signals that are generated by various sound sources, the network terminal device comprising:
an output control device for controlling the output sound volume of each sound source in accordance with the positional relationship among a symbol corresponding to the local device and the other sound sources positioned in a virtual world.

15. A computer-readable recording medium storing a program for causing a computer, which functions as a server constituting an audio signal transmission system for using a plurality of network terminal devices to receive audio signals that are generated by various sound sources, to perform the steps of:
acquiring the relationship between a symbol moving in a virtual world and a network terminal device from a relationship storage device;
controlling the move of a symbol in accordance with the associated control data received from each network terminal device that serves as a sound source; and
displaying an image combination of various symbols and the virtual world as a shared screen.

16. A computer-readable recording medium storing a program for causing a computer, which functions as a network terminal device constituting an audio signal transmission system for using a plurality of network terminal devices to receive audio signals that are generated by various sound sources, to perform the steps of:
acquiring the positional relationship among a symbol corresponding to the local device and the other sound sources positioned in a virtual world; and
controlling the output sound volume of each sound source in accordance with the acquired positional relationship.
